# EUROPEAN PATENT SPECIFICATION

(11) **EP 3 002 091 B1**
(45) Date of publication and mention of the grant of the patent: **21.03.2018**
(21) Application number: 15187084.7
(22) Date of filing: 28.09.2015
(51) Int. Cl.: B25J 19/00

(54) **ROBOT**
ROBOTER
ROBOT

(30) Priority: 30.09.2014 JP 2014200028
(43) Date of publication of application: 06.04.2016
(73) Proprietor: Seiko Epson Corporation, Shinjuku-ku Tokyo 163-0811 (JP)
(72) Inventor: Owa, Takuya, Nagano 392-8502 (JP)
(74) Representative: Hoffmann Eitle

(56) References cited:
- WO-A1-2006/085823
- WO-A1-2014/008668
- JP-A- H09 141 592
- JP-A- 2013 212 560
- US-A1- 2009 224 109
- US-A1- 2010 313 694

## Description

### BACKGROUND

### 1. Technical Field

The present invention relates to a robot.

### 2. Related Art

In related art, in robots having driven arms, generally, cable routings including cables for power supply to motors for driving the arms, communication lines for various sensors and controls, and pipes for driving using fluids are present inside and outside of the arms. As a configuration in which the cable routings are drawn out from the inside to the outside of the arm and used, a technology disclosed in Patent Document 1 (Japanese Patent No. 3746244) is known. That is, in the technology disclosed in Patent Document 1, a configuration in which cable routings inside of an arm are drawn out in a direction perpendicular to the casing of the arm and the cable routings are bent nearly perpendicularly and routed toward the next arm is disclosed. Further, Patent Document 2 (Japanese Patent No. 5159994) discloses a configuration in which cable routings are routed inside of an arm.

As in the technology disclosed in Patent Document 1, in the case where the direction in which the cable routings inside of the arm are drawn out is perpendicular to the rotation axis of the arm, the cable routings easily reach a region farther from the rotation axis with the rotation of the arm. Further, a fixing part for bending and directing the cable routings extending perpendicularly to the rotation axis toward an end effector (a cable routing fixing part 11' of Patent Document 1 or the like) is necessary, and the fixing part enlarges the circle of movement of the arm. Accordingly, in related art disclosed in Patent Document 1, the drive range of the arm may be restricted for avoidance of the cable routings in contact with another part or the like. Furthermore, in the technology disclosed in Patent Document 2, the size of the outer shape of the arm becomes larger and the drive range of the arm may be restricted.

US-A1-2009/0224109 discloses a robot according to the preamble of claim 1.

US-A1-2010/313694 discloses an apparatus for holding cables in a rotary shaft of a robot.

### SUMMARY

The object of the invention is to provide a structure in which cable routings are harder to cause restriction on a drive range of an arm.

A robot according to the present invention includes the features recited in claim 1.

That is, as seen from the axis direction of the rotation axis, the circle having the radius as the distance between the part of the arm farthest from the rotation axis and the rotation axis and centered at the rotation axis is a circle of movement as the maximum range that the arm reaches when the arm rotates about the rotation axis (the other parts are fixed) . Further, when the cable routing connecting part is present within the circle of movement (with in a cylinder formed by a locus of movement of the circle of movement along the rotation axis), the cable routing connecting part does not reach the outside of the circle of movement regardless of the rotation state of the arm. Therefore, when the arm is driven by a rotation or the like, the likelihood of the interference of the cable routing connecting part with objects around (the other parts of the robot, members present around the robot, etc.) is not higher. Accordingly, the robot has the structure in which the cable routing is harder to cause the restriction on the drive range of the arm.

Here, it is sufficient that the arm is a part that rotates around the predetermined rotation axis as the rotation center and the robot has one or more of the arms. Further, the shape of the arm is not limited. The arm may extend in the rotation axis direction or the arm extend in a direction different from the rotation axis (e.g. a direction perpendicular to the rotation axis) . Note that the arm extending in the rotation axis direction, e.g., the so-called twistable arm having a cylindrical casing with the rotation axis inside of the cylinder is a preferable configuration example because the cable routing connected to the cable routing connecting part rotates with the rotation of the arm and the cable routing extends in a direction harder to hinder the rotation.

The cable routing connecting part is a part that can connect the cable routing inside of the arm and the cable routing outside of the arm. That is, in the robot, the cable routings present inside and outside of the arm provided with the cable routing connecting part are connected via the cable routing connecting part. It is preferable that the cable routing connecting part is adapted to connect the cable routings for transferring objects to be transferred. When the cable routings are conductors (the objects to be transferred are power, signals, or the like), the cable routing connecting part is a connector that secures conduction between the cable routings. Or, when the cable routings are pipes (the objects to be transferred are fluids or the like), the cable routing connecting part is a joint that may communicate the fluids between the pipes.

Further, the cable routing connecting part is present within the circle (circle of movement) having the radius as the distance between the part of the arm farthest from the rotation axis and the rotation axis and centered at the rotation axis. That is, the cable routing connecting part projects from the outer periphery to the outside so as to connect the cable routings inside and outside of the arm, and the height and the orientation with respect to the rotation axis of the cable routing connecting part are adjusted and, as a result of the adjustment, the cable routing connecting part is designed to be within the circle of movement.

Note that the circle of movement is a circle defined by the distance between the part of the arm farthest from the rotation axis and the rotation axis, and the maximum range that the arm reaches when the arm rotates about the rotation axis (the other parts are fixed) . Therefore, the outside of the circle when the circle is moved to an arbitrary distance along the rotation axis is a region that the arm does not reach. Therefore, presence of the cable routing connecting part within the circle of movement refers to presence of the cable routing connecting part within the circle when the cable routing connecting part and the arm are projected on a plane perpendicular to the rotation axis.

Furthermore, the cable routing connecting part is configured such that the cable routing connecting part is capable of connecting the cable routing from a direction in which an object to be connected to the cable routing is present, and a tilt angle of a connection direction of the cable routing to the cable routing connecting part with respect to the rotation axis may be equal to or less than 45 degrees. That is, the object to be connected is connected to one end of the cable routing present outside of the arm and the cable routing connecting part is connected to the other end. Further, in comparison between the direction perpendicular to the rotation axis and the rotation axis, the connection direction of the cable routing to the cable routing connecting part is not directed toward the former, but directed toward the latter. Therefore, the cable routing present outside of the arm is harder to spread in the radial direction with the rotation of the arm, and the arm may be rotated in a state in which the cable routing is present near the arm. Accordingly, the arm may be rotated in a state in which the cable routing is harder to cause the restriction on the drive range of the arm.

Note that the cable routing connecting part is configured to be capable of connecting the cable routing outside of the arm from the direction in which the object to be connected to the cable routing is present. That is, the cable routing connecting part is directed toward the object to be connected to the cable routing, and it is not necessary to bend and direct the cable routing in the opposite direction to the object to be connected toward the object to be connected. Accordingly, the cable routing may be routed from the inside to the outside without excessive stress on the cable routing and may be connected to the object to be connected.

The phrase that the cable routing connecting part is capable of connecting the cable routing from the direction in which the object to be connected to the cable routing is present means that the connection of the object to be connected from the opposite side in a line segment in parallel to the rotation axis is excluded, and thereby, it is sufficient that the cable routing can be connected to the cable routing connecting part without excessive bending. It is sufficient that the object to be connected to the cable routing is a part in which an object transferred by the cable routing is used and, e.g. an end effector, various arms, or the like that moves using power and signals as objects transferred by the cable routing is assumed.

Note that, when the tilt angle of the connection direction of the cable routing to the cable routing connecting part with respect to the rotation axis is equal to or 45 degrees, the cable routing directed away from the rotation axis is suppressed, and thus, it is sufficient that the tilt angle is equal to or 45 degrees. Therefore, it is sufficient that the tilt angle is an angle at which the cable routing directed away from the rotation axis is suppressed and the drive range of the arm is less restricted, e.g., equal to or less than ten degrees. Note that the tilt angle constantly takes a positive value because the tilt angle is an angle between the connection direction and the rotation axis and it is preferable that the distal end of the cable routing connecting part is directed in the circumferential direction of the circle of movement of the arm, however, the distal end of the cable routing connecting part may be directed in the rotation axis direction. According to the configuration, the restriction on the circle of movement of the arm by the cable routing connecting part may be more effectively suppressed while collision of the cable routing with the arm is suppressed.

Further, the cable routing connecting part may be capable of connecting the cable routing from the direction in which the object to be connected to the cable routing is present, and the connection direction of the cable routing to the cable routing connecting part and the rotation axis may be in parallel. That is, the cable routing connecting part is adapted to connect the cable routing outside of the arm in a direction in parallel to the rotation axis of the arm itself provided with the cable routing connecting part. In the configuration, the cable routing present outside of the arm is connected to the cable routing connecting part, and the cable routing is harder to spread in the radial direction with the rotation of the arm and the arm may be rotated in a state in which the cable routing is present near the arm. Accordingly, the arm may be rotated in a state in which the cable routing is harder to cause the restriction on the drive range of the arm.

Furthermore, a first rotating arm rotatably provided with respect to the arm and a second rotating arm rotatably provided on the first rotating arm to which an end effector can be attached may be provided. That is, the cable routing connecting part may be provided in the third arm from the end effector. The two arms (the first rotating arm and the second rotating arm) present between the arm to which the cable routing connecting part is attached and the end effector are generally designed to have a sufficiently smaller outer size in order not to hinder the movement of the end effector. Therefore, it is preferable that the cable routings are not contained in these arms present closer to the end effector wherever possible.

On the other hand, in the third arm from the end effector (the arm in which the cable routing connecting part is provided), obviously, it is preferable that the outer size is smaller. Accordingly, as one embodiment of the invention, the cable routing connecting part may be provided for routing the cable routing present inside of the third arm from the end effector to the outside. According to the configuration, it is not necessary to secure a space containing the cable routing in the arm near the end effector and the outer size of the arm near the end effector may be made smaller.

Further, a plurality of the cable routing connecting parts may be provided in positions rotation symmetric with respect to the rotation axis. For example, when the number of cable routing connecting parts is two, the cable routing connecting parts are provided on a certain diameter of a circle around the rotation axis. When the number of cable routing connecting parts is three, the cable routing connecting parts are provided on a circumference of a circle around the rotation axis and angles between radii connecting the respective cable routing connecting parts and the rotation axis are 120 degrees (= 360/3). According to the configuration, the cable routing connecting parts are not eccentrically located on the circle around the rotation axis, and formation of an inferior-to-superior relationship that a specific cable routing connecting part of the plurality of cable routing connecting parts is advantageous for routing of the cable routings, but the other cable routing connecting parts are disadvantageous may be suppressed regardless of the rotation angle of the arm.

Note that, in the configuration in which the plurality of cable routing connecting parts are present in rotation symmetric positions with respect to the rotation axis, the members around the cable routing connecting parts may be formed to have the same rotation symmetry with the cable routing connecting parts. According to the configuration, the commonality of the respective members may be provided in response to the rotation symmetry (e.g., in the case of two-fold symmetry, the casing of the arm around the cable routing connecting parts etc. may be formed by two common parts).

Furthermore, the plurality of cable routing connecting parts may have the same shape. According to the configuration, the plurality of cable routing connecting parts may be formed using common parts and the manufacturing cost may be suppressed.

Further, an aspect of the invention may be configured as a robot including an arm that rotates about a predetermined rotation axis as a rotation center, and a cable routing connecting part that can connect a cable routing inside of the arm and a cable routing outside of the arm, wherein the cable routing connecting part may be provided in the arm and can connect the cable routing from a direction in which an object to be connected to the cable routing is present, and a tilt angle of a connection direction of the cable routing to the cable routing connecting part with respect to the rotation axis may be equal to or less than 45 degrees . That is, the robot in which the tilt angle of the connection direction of the cable routing to the cable routing connecting part with respect to the rotation axis is equal to or less than 45 degrees regardless whether or not the cable routing connecting part is within the circle of movement of the arm may be formed. The tilt angle may be equal to or less than ten degrees as described above, or zero degrees (in parallel).

Furthermore, the robot to which the invention is applied may be provided as a robot system including a control unit that controls the robot and cooperates with various apparatuses etc. and various configurations can be employed.

### BRIEF DESCRIPTION OF THE DRAWINGS

The invention will be described with reference to the accompanying drawings, wherein like numbers reference like elements.
Fig. 1A shows a robot according to an embodiment of the invention, and Figs. 1B and 1C show a fourth arm.
Figs. 2A and 2B show the fourth arm.

### DESCRIPTION OF EXEMPLARY EMBODIMENTS

Here, embodiments of the invention are explained in the following order.
(1) Configuration of Robot:
(2) Configuration of Cable Routing Connecting Part:
(3) Other Embodiments:

### (1) Configuration of Robot:

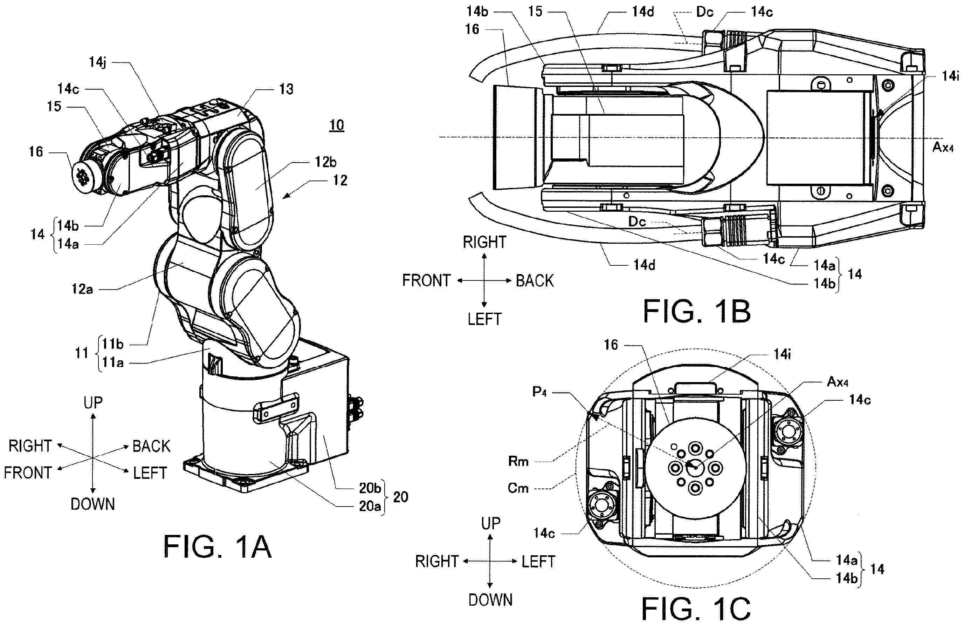

Fig. 1A shows a configuration of a robot 10 as one embodiment of the invention. The robot 10 according to the embodiment includes a plurality of arms 11 to 16 and a base 20. In the specification, the arms are numbered sequentially from the base 20 side for distinction. That is, the first arm 11 is rotatably supported by the base 20, and the second arm 12 is rotatably supported by the first arm 11. Further, the third arm 13 is rotatably supported by the second arm 12, the fourth arm 14 is rotatably supported by the third arm 13, the fifth arm 15 is rotatably supported by the fourth arm 14, and the sixth arm 16 is rotatably supported by the fifth arm 15. The rotations of the respective arms are realized by motors etc. (not shown) provided within the base 20 and the arms. Note that, in the embodiment, an end effector (not shown) may be attached to the sixth arm 16.

In Fig. 1A, the robot 10 is installed by placing the base 20 in an installation location and fastened to the installation location with bolts or the like. In the specification, directions are coordinated with directions perpendicular to the plane on which the base 20 is installed are upward and downward directions and a direction in which the main drive ranges of the respective arms are present in the plane on which the base 20 is installed as a frontward direction and shown in Fig. 1A. Hereinafter, up, down, front, back, left, right are shown in reference to the directions shown in Fig. 1A.

The base 20 has a general shape in which a main body 20a nearly in a cylindrical shape and a rectangular part 20b nearly in a rectangular shape are coupled. In Fig. 1A, the main body 20a is provided on the front side and the rectangular part 20b is provided on the back side. On the main body 20a, the first arm 11 is supported by the main body 20a so as to rotate about a rotation axis extending in the up-to-down direction in Fig. 1A as a rotation center. The first arm 11 includes a main body 11a and supporting parts 11b, and is supported by the base 20 with the main body 11a disposed on the main body 20a of the base 20. The supporting parts 11b are parts that sandwich and support the second arm 12. The second arm 12 includes a main body 12a and supporting parts 12b, and is supported by the supporting parts 11b with the main body 12a sandwiched by the supporting parts 11b so as to rotate about a rotation axis extending in the right-to-left direction in Fig. 1A as a rotation center. The supporting parts 12b are parts that sandwich and support the third arm 13.

The third arm 13 has a nearly rectangular parallelepiped shape and is supported by the supporting parts 12b with the third arm sandwiched by the supporting parts 12b so as to rotate about a rotation axis extending in the right-to-left direction in Fig. 1A as a rotation center. The fourth arm 14 is supported by an end surface of the third arm (an end surface on the front side in the state shown in Fig. 1A) so that the fourth arm 14 may rotate about a rotation axis in parallel to a direction (a front-to-back direction in the state shown in Fig. 1A) perpendicular to the rotation axis of the third arm (in the right-to-left direction in the state shown in Fig. 1A).

The fourth arm 14 includes a main body 14a and supporting parts 14b, and is supported by the third arm 13 so that the main body 14a may rotate about a rotation axis extending in the front-to-back direction in Fig. 1A as a rotation center. That is, in the embodiment, the direction in which the fourth arm 14 extends and the direction in which the rotation axis extends are in parallel and the fourth arm 14 is twistable. The supporting parts 14b are parts that sandwich and support the fifth arm 15. The fifth arm 15 is sandwiched by the supporting parts 14b and supported by the supporting parts 14b so as to rotate about a rotation axis extending in the right-to-left direction in Fig. 1A as a rotation center. Further, the sixth arm 16 is supported by the fifth arm 15 so as to rotate about a rotation axis extending in the front-to-back direction in Fig. 1A as a rotation center. That is, the sixth arm 16 is also adapted to be twistable.

A plurality of the cable routings for transferring power, signals, fluids (air) to the other parts can be connected to the base 20. That is, the cable routings are connected to the base 20 and the cable routings are routed inside of the base 20, and thereby, power, signals, fluids, etc. are transferred to the base 20 and an arbitrary arm of the first arm 11 to the sixth arm 16 and used.

### (2) Configuration of Cable Routing Connecting Part:

These cable routings are routed from the inside of the base 20 to the inside of the first arm 11, the cable routings are routed from the casing of an arbitrary arm to the outside, and thereby, the arm closer to the distal end (with the higher number) than the casing may be downsized. Accordingly, in the embodiment, cable routing connecting parts 14c that can connect the cable routings inside of the fourth arm 14 and the cable routings outside of the fourth arm 14 are provided in the fourth arm 14.

Figs. 1B and 1C extract and show a part of the fourth arm 14 and the arms closer to the distal end (the fourth arm 14 to the sixth arm 16) from the robot 10, Fig. 1B is a view of the fourth arm 14 as seen from above to below, and Fig. 1C is a view of the fourth arm 14 as seen from the front side to the back side. Therefore, Fig. 1C may be regarded as a view of projection of the fourth arm 14 on a plane perpendicular to the rotation axis.

In Figs. 1B and 1C, the rotation axis of the fourth arm 14 is shown as Ax₄. As shown in Figs. 1B and 1C, the fourth arm 14 includes the cable routing connecting parts 14c projecting from the third arm 13 side toward the sixth arm 16 side (end effector side) near the center of the fourth arm 14 in the rotation axis Ax₄ direction. The cable routing connecting parts 14c are members for connecting the cable routings for transferring objects to be transferred of the cable routings. In the embodiment, the cable routings are pipes for transferring fluids, and the cable routing connecting parts 14c are joints for connecting pipes inside and outside of the fourth arm 14 so that the fluids may communicate with each other.

That is, in the embodiment, the pipes as the cable routings are routed from the base 20 to the inside of the fourth arm 14 via the first arm 11, the second arm 12, and the third arm 13. The cable routing connecting parts 14c may connect the cable routings inside of the fourth arm 14 (not shown) to cable routings 14d present outside of the fourth arm. In the cable routings 14d, the end parts opposite to the cable routing connecting parts 14c are connected to the end effector. Note that, in Fig. 1C, the cable routings 14d are not shown.

The cable routing connecting parts 14c in the embodiment may connect the cable routings 14d in directions in parallel to the directions in which the cable routing connecting parts 14c extend. In Fig. 1B, connection directions Dc as the directions in which the cable routings 14d are connected to the cable routing connecting parts 14c are shown by broken lines . In the embodiment, the connection directions Dc of the cable routing connecting parts 14c and the heights of the cable routing connecting parts 14c in the connection directions Dc are designed so that the cable routing connecting parts 14c may present within the circle of movement of the fourth arm 14.

That is, a circle having a radius as a distance Rm between a part P₄ (see Fig. 1C) of the fourth arm farthest from the rotation axis Ax₄ and the rotation axis Ax₄ and centered at the rotation axis Ax₄ is the circle of movement showing the maximum range that the fourth arm 14 may reach by the rotation. In Fig. 1C, a circle of movement Cm, the distance Rm, and the radius are shown by broken lines. In the embodiment, the heights of the cable routing connecting parts 14c in the connection directions Dc are predetermined heights and known. The connection directions Dc of the cable routing connecting parts 14c are slightly tilted (at about three degrees) with respect to the rotation axis Ax₄ as shown in Fig. 1B, and the tilt angles are defined so that the cable routing connecting parts 14c projecting from the fourth arm 14 may be contained within the circle of movement. Accordingly, as shown in Fig. 1C, the cable routing connecting parts 14c are present within the circle of movement of the fourth arm 14.

As shown in Fig. 1C, when the cable routing connecting parts 14c are present within the circle of movement (when the cable routing connecting parts 14c are present within a cylinder formed by a locus of movement of the circle of movement along the rotation axis), the cable routing connecting parts 14c do not reach the outside of the circle of movement regardless of the rotation state of the fourth arm 14. Therefore, when the respective arms are driven by rotations or the like, the likelihood of the interference with objects around (the other parts of the robot 10, the members present around the robot 10, etc.) is not higher. As described above, in the embodiment, the structure in which the cable routings are harder to cause the restriction on the drive range of the arm may be provided.

Further, in the above described configuration, the tilt angles of the connection directions Dc with respect to the rotation axis Ax₄ are about three degrees. Here, the tilt angles take only positive values and the respective cable routing connecting parts 14c are directed toward the circumference of the rotation circle in the two cable routing connecting parts 14c. Therefore, compared to the case where the respective cable routing connecting parts 14c are directed in the rotation axis Ax₄ direction, the cable routings 14d can be easily connected to the cable routing connecting parts 14c.

Further, regarding the tilt angle of three degrees, the tilt angle is in a range of 45 degrees or less and ten degrees or less. Therefore, in comparison between the direction perpendicular to the rotation axis Ax₄ and the direction in parallel to the rotation axis Ax₄, the cable routing connecting parts 14c are not directed toward the former, but directed toward the latter. Therefore, the cable routings 14d present outside of the fourth arm 14 are harder to spread in the radial direction with the rotation of the fourth arm 14, and the fourth arm 14 may be rotated in a state in which the cable routings 14d are present near the fourth arm 14. Accordingly, the fourth arm 14 may be rotated in a state in which the cable routings are harder to cause the restriction on the drive range of the fourth arm 14.

Note that the fourth arm 14 is a member elongated in the rotation axis direction and rotatably supported by the third arm 13 and twisted. Regarding the arm twisted in the robot, even when the entire length of the arm itself is longer, the radius around the rotation axis at the center can be made smaller and the circle of movement is easily made smaller. However, for example, in the configuration in which the cable routings extend in the direction perpendicular to the rotation axis of the arm as in Patent Document 1, the circle of movement of the arm becomes larger and the advantage of the twisted arm that downsizing is easier is diminished. On the other hand, in the embodiment, the tilt angles of the cable routing connecting parts 14c are equal to or less than 45 degrees, preferably equal to or less than ten degrees and the cable routing connecting parts 14c are contained within the circle of movement of the arm, and thereby, the advantage of the twisted arm that downsizing is easier is not diminished.

Furthermore, in the embodiment, the fifth arm 15 as a first rotating arm is rotatably provided with respect to the fourth arm 14 and the sixth arm 16 as a second rotating arm to which the end effector can be attached is rotatably provided with respect to the fifth arm 15. That is, the cable routing connecting parts 14c are provided in the fourth arm 14 as the third arm from the end effector. The two arms (the fifth arm 15 and the sixth arm 16) present between the fourth arm 14 to which the cable routing connecting parts 14c are attached and the end effector are generally designed to have sufficiently smaller outer sizes in order not to hinder the movement of the end effector. Therefore, it is preferable that the cable routings are not contained in these arms present closer to the end effector wherever possible.

On the other hand, in the fourth arm 14 as the third arm from the end effector, obviously, it is preferable that the outer size is smaller. Accordingly, in the embodiment, a configuration in which the cable routings present inside of the fourth arm 14 are routed from the cable routing connecting parts 14c to the outside is employed. According to the configuration, it is not necessary to secure a space containing the cable routings in the fourth arm 14 near the end effector (the fifth arm 15, the sixth arm 16, and a part of the fourth arm 14) and the outer size of the fourth arm 14 near the end effector may be made smaller.

Further, in the embodiment, the two cable routing connecting parts 14c are provided in positions in rotation symmetry with respect to the rotation axis Ax₄. That is, the cable routing connecting parts 14c are symmetric with respect to the rotation axis Ax₄. According to the configuration, the cable routing connecting parts 14c are not eccentrically located on the circle around the rotation axis, and formation of an inferior-to-superior relationship that one of the two cable routing connecting parts 14c is advantageous for routing of the cable routings, but the other cable routing connecting part 14c is disadvantageous may be suppressed regardless of the rotation angle of the fourth arm 14 .

Note that, in a configuration in which a plurality of the cable routing connecting parts 14c are present in rotation-symmetric positions with respect to the rotation axis, the members around the cable routing connecting parts 14c may be formed to have the same rotation symmetry as the cable routing connecting parts 14c. For example, in the embodiment, when part or all of the casing and the internal component elements of the fourth arm 14 are formed by members having symmetric shapes with respect to a plane containing the rotation axis Ax₄, commonality of the respective members symmetric with respect to the plane may be provided. Further, in the embodiment, the two cable routing connecting parts 14c have the same shape and the plurality of cable routing connecting parts 14c may be formed by common parts, and the manufacturing cost may be suppressed.

Furthermore, in the embodiment, when the fourth arm 14 is seen from the front side toward the back side, as shown in Fig. 1C, the outer periphery of the main body 14a of the fourth arm 14 has a nearly rectangular shape and the cable routing connecting parts 14c are provided near the two corners of the rectangular shape. Therefore, assuming that the rectangular shape is divided into upper and lower parts, two rectangular spaces elongated in the right-to-left direction are formed after division. In the embodiment, the respective two rectangular parts elongated in the right-to-left direction contain motors so as to rotate the fifth arm 15 and the sixth arm 16.

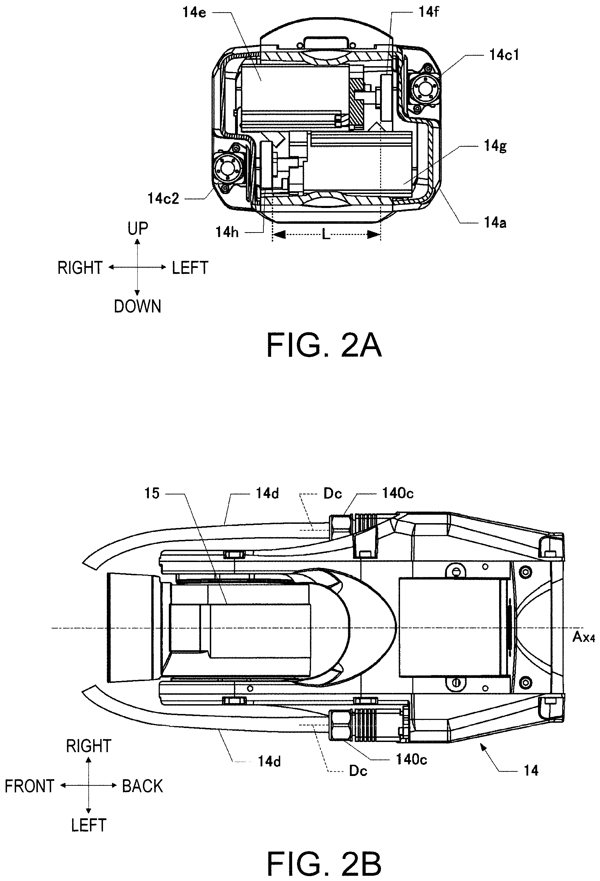

Fig. 2A shows a state in which the casing of the main body 14a is cut and the interior of the main body 14a is seen from the front side toward the back side. As shown in the drawing, in the embodiment, a motor 14e is provided in the right space (on the left side in the drawing, on the right side according to the directions shown in Fig. 1A) of an upper cable routing connecting parts 14c1, and a motor 14g is provided in the left space of a lower cable routing connecting parts 14c2. The motors 14e, 14g are provided inside of the main body 14a in orientations with output shafts extending toward the cable routing connecting parts 14c sides. Pulleys 14f, 14h are attached to the respective output shafts of the motors 14e, 14g. Belts are looped over the respective pulleys 14f, 14h and extend in the front-back direction toward the inside of the supporting parts 14b shown in Fig. 1B. The rotation drive forces of the motors 14e, 14g are transmitted to the fifth arm 15 and the sixth arm 16 via pulleys, gears, reducers, etc. (not shown) and the arms are rotated.

As described above, in the embodiment, the outer shape of the casing of the main body 14a is nearly the rectangular shape and the cable routing connecting parts 14c (14c1, 14c2) are provided in the corners thereof, and thereby, the two rectangular spaces elongated in the right-to-left direction in Fig. 2A are formed inside of the main body 14a. Accordingly, the motors 14e, 14g elongated in the extension direction of the output shafts are provided in the rectangular spaces inside of the main body 14a so that the pulleys 14f, 14h may be sandwiched between the cable routing connecting parts 14c1, 14c2 and the motors 14e, 14g. According to the configuration, compared to the configuration in which the motors 14e, 14g are sandwiched between the pulleys 14f, 14h and the cable routing connecting parts 14c1, 14c2, a distance L between the pulleys 14f, 14h may be made shorter. Therefore, the distance between the two supporting parts 14b (see Fig. 1B) extending in the front-to-back direction to sandwich the fifth arm 15 may be made shorter. As a result, the fourth arm 14, the fifth arm 15, and the sixth arm 16 may be downsized.

As above, the cable routing connecting parts 14c that can connect the pipes as the cable routings to the pipes inside of the fourth arm 14 are explained, however, obviously, the other cable routings than the pipes, e.g. wires for transferring power and signals may be connected inside and outside of the arm. In the above described embodiment, a connector 14i that can connect wires as cable routings is provided in the fourth arm 14. That is, in the embodiment, the shape of the main body 14a as seen from the front side toward the rear side is the rectangular shape elongated in the right-to-left direction as shown in Fig. 1C. Accordingly, as shown in Fig. 1C, the larger spaces are formed within the circle of movement in the upper and lower part of the main body 14a.

Accordingly, in the embodiment, the connector 14i is formed in the long side part of the above described rectangular shape in the main body 14a. At least part of the wires inside of the main body 14a is connected to the connector 14i and the cable routings outside are connected to a connector 14j shown in Fig. 1A and the connector 14j is connected to the connector 14i, and thereby, the wires inside and outside of the fourth arm 14 can be connected. Note that the connector 14i is present within the circle of movement of the fourth arm 14, and thereby, when the respective arms are driven by rotations or the like, the likelihood of the interference with objects around (the other parts of the robot 10, the members present around the robot 10, etc.) is not made higher.

### (3) Other Embodiments:

The above described embodiment is an example for embodying the invention, and other various configurations can be employed as long as a configuration in which the cable routing connecting parts are provided within the circle of movement of the arm or a configuration in which the tilt angles of the connection direction of the cable routings to the cable routing connecting parts with respect to the rotation axis are set to be equal to or less than 45 degrees is employed. For example, the embodiment of the robot 10 is not limited to the embodiment shown in Fig. 1A, but may be any other robot such as a dual-arm robot, a humanoid robot, or a scalar robot. Obviously, the configuration of the arm is not limited to the embodiment shown in Fig. 1A. A seven-axis robot including seven arms may be employed and the number of arms is not limited.

Further, in the above described embodiment, the cable routing connecting part may be provided in an arbitrary position of an arbitrary arm. For example, the cable routing connecting part may be provided on the lower side of the fourth arm 14 shown in Fig. 1C or the cable routing connecting part may be provided in another arm.

Furthermore, the tilt angles of the connection directions Dc with respect to the rotation axis Ax₄ may be zero degrees, i.e. , the connection directions Dc and the rotation axis Ax₄ may be in parallel. Fig. 2B shows an embodiment having nearly the same configuration as the above described embodiment shown in Fig. 1B, but different in angles of cable routing connecting parts 140c. Fig. 2B shows a state in which the cable routing connecting parts 140c are attached to the fourth arm 14 of the robot shown in Fig. 1A and seen from above toward below. Fig. 2B shows the same configurations as those of Fig. 1B with the same signs.

As shown in Fig. 2B, the connection directions Dc of the cable routings with respect to the cable routing connecting parts 140c are in parallel to the rotation axis Ax₄. Therefore, in the embodiment shown in Fig. 2B, the cable routings outside of the fourth arm 14 may be connected toward the direction in parallel to the rotation axis Ax₄ of the fourth arm 14. In the configuration, the cable routings present outside of the fourth arm 14 are connected to the cable routing connecting parts 140c, and thereby, the cable routings are harder to spread in the radial direction with the rotation of the fourth arm 14 and the fourth arm 14 may be rotated in a state in which the cable routings are present near the fourth arm 14. Note that, in the case where the connection directions Dc are in parallel to the rotation axis Ax₄, even when the cable routing connecting parts 140c having arbitrary heights are attached to the fourth arm 14, the cable routing connecting parts 140c are contained within the circle of movement of the fourth arm 14. Therefore, the degree of freedom of selection of the cable routing connecting parts 140c is higher.

## Claims

1. A robot (10) comprising:
an arm (11-16) that is configured to rotate about a predetermined rotation axis as a rotation center, wherein the arm (11-16) is a member elongated in the direction of the rotation axis; and
a cable routing connecting part (14c, 140c) that is configured to connect a cable routing inside of the arm (11-16) and a cable routing outside of the arm (11-16),
wherein the cable routing connecting part (14c, 140c) is provided in the arm (11-16), and present within a circle having a radius which equals a distance between a part of the arm (11-16) farthest from the rotation axis as seen from an axis direction of the rotation axis and the rotation axis, wherein the circle is centered at the rotation axis;
**characterized in that**
the cable routing connecting part (14c, 140c) is capable of connecting the cable routing from a direction in which an object to be connected to the cable routing is present, and a tilt angle of a connection direction of the cable routing to the cable routing connecting part (14c, 140c) with respect to the rotation axis is equal to or less than 45 degrees.

2. The robot (10) according to claim 1, wherein the tilt angle is equal to or less than ten degrees.

3. The robot (10) according to any one of claims 1 and 2, wherein the cable routing connecting part (14c, 140c) is capable of connecting the cable routing from a direction in which an object to be connected to the cable routing is present, and a connection direction of the cable routing to the cable routing connecting part (14c, 140c) and the rotation axis are in parallel.

4. The robot (10) according to any one of claims 1 to 3, further comprising:
a first rotating arm rotatably provided with respect to the arm (11-16); and
a second rotating arm rotatably provided on the first rotating arm (11-16) to which an end effector can be attached.

5. The robot (10) according to any one of claims 1 to 4, wherein a plurality of the cable routing connecting parts (14c, 140c) are provided in positions which are rotationally symmetric with respect to the rotation axis.

6. The robot (10) according to claim 5, wherein the plurality of cable routing connecting parts (14c, 140c) have the same shape.

## Patentansprüche

1. Roboter (10), umfassend:
einen Arm (11-16), der so konfiguriert ist, um eine vorbestimmte Rotationsachse als Rotationspunkt zu rotieren, wobei der Arm (11-16) ein in der Richtung der Rotationsachse verlängertes Element ist; und
ein Kabelführungs-Verbindungsteil (14c, 140c), das so konfiguriert ist, eine Kabelführung innerhalb des Arms (11-16) und eine Kabelführung außerhalb des Arms (11-16) zu verbinden,
wobei das Kabelführungs-Verbindungsteil (14c, 140c) in dem Arm (11-16) vorgesehen ist und innerhalb eines Kreises mit einem Radius vorliegt, der gleich einem Abstand zwischen einem von einer Achsrichtung der Rotationsachse gesehen am weitesten von der Rotationsachse entfernten Teil des Arms (11-16) und der Rotationsachse ist, wobei der Kreis um die Rotationsachse zentriert ist;
**dadurch gekennzeichnet, dass**
das Kabelführungs-Verbindungsteil (14c, 140c) die Kabelführung von einer Richtung verbinden kann, in der ein mit der Kabelführung zu verbindender Gegenstand vorliegt, und ein Neigungswinkel einer Verbindungsrichtung der Kabelführung zu dem Kabelführungs-Verbindungsteil (14c, 140c) gegenüber der Rotationsachse gleich oder weniger als 45 Grad beträgt.

2. Roboter (10) nach Anspruch 1, wobei der Neigungswinkel gleich oder weniger als 10 Grad beträgt.

3. Roboter (10) nach einem der Ansprüche 1 und 2, wobei das Kabelführungs-Verbindungsteil (14c, 140c) die Kabelführung von einer Richtung verbinden kann, in der ein mit der Kabelführung zu verbindender Gegenstand vorliegt, und eine Verbindungsrichtung der Kabelführung zu dem Kabelführungs-Verbindungsteil (14c, 140c) und die Rotationsachse parallel sind.

4. Roboter (10) nach einem der Ansprüche 1 bis 3, weiter umfassend:
einen ersten rotierenden Arm, der rotierbar in Bezug zu dem Arm (11-16) vorgesehen ist; und
einen zweiten rotierenden Arm, der rotierbar auf dem ersten rotierenden Arm (11-16) vorgesehen ist, an dem ein Endeffektor befestigt werden kann.

5. Roboter (10) nach einem der Ansprüche 1 bis 4, wobei eine Vielzahl von Kabelführungs-Verbindungsteilen (14c, 140c) an Positionen vorgesehen ist, die rotierend in Bezug auf die Rotationsachse symmetrisch sind.

6. Roboter (10) nach Anspruch 5, wobei die Vielzahl von Kabelführungs-Verbindungsteilen (14c, 140c) dieselbe Form besitzt.

## Revendications

1. Robot (10) comprenant:
un bras (11-16) qui est configuré pour tourner autour d'un axe de rotation prédéterminé en tant que centre de rotation, dans lequel le bras (11-16) est un élément allongé dans la direction de l'axe de rotation ; et
une partie de connexion de passage de câble (14c, 140c) qui est configurée pour relier un passage de câble à l'intérieur du bras (11-16) et un passage de câble à l'extérieur du bras (11-16),
dans lequel la partie de connexion de passage de câble (14c, 140c) est fournie dans le bras (11-16), et présente dans un cercle ayant un rayon qui est égal à une distance entre une partie du bras (11-16) la plus éloignée de l'axe de rotation, comme vu à partir d'une direction d'axe de l'axe de rotation, et l'axe de rotation, le cercle étant centré sur l'axe de rotation ;
**caractérisé en ce que**
la partie de connexion de passage de câble (14c, 140c) est capable de relier le passage de câble à partir d'une direction dans laquelle un objet à relier au passage de câble est présent, et un angle d'inclinaison d'une direction de connexion du passage de câble à la partie de connexion du passage de câble (14c, 140c) par rapport à l'axe de rotation est égal ou inférieur à 45 degrés.

2. Robot (10) selon la revendication 1, dans lequel l'angle d'inclinaison est égal ou inférieur à dix degrés.

3. Robot (10) selon l'une quelconque des revendications 1 et 2, dans lequel la partie de connexion de passage de câble (14c, 140c) est capable de relier le passage de câble à partir d'une direction dans laquelle un objet à relier au passage de câble est présent, et une direction de connexion du passage de câble à la partie de connexion de passage de câble (14c, 140c) et les axes de rotation sont en parallèle.

4. Robot (10) selon l'une quelconque des revendications 1 à 3, comprenant en outre :
un premier bras rotatif fourni rotativement par rapport au bras (11-16) ; et
un second bras rotatif fourni de manière rotative sur le premier bras rotatif (11-16) auquel un effecteur terminal peut être fixé.

5. Robot (10) selon l'une quelconque des revendications 1 à 4, dans lequel une pluralité des parties de connexion de passage de câble (14c, 140c) est prévue dans des positions qui sont symétriques en rotation par rapport à l'axe de rotation.

6. Robot (10) selon la revendication 5, dans lequel la pluralité de parties de connexion de passage de câble (14c, 140c) a la même forme.
